# EUROPÄISCHE PATENTSCHRIFT

(11) **EP 3 707 984 B1**
(45) Veröffentlichungstag und Bekanntmachung des Hinweises auf die Patenterteilung: **24.04.2024**
(21) Anmeldenummer: 20161202.5
(22) Anmeldetag: 05.03.2020
(51) Int. Cl.: A01C 7/20, A01C 11/00, A01C 5/06

(54) **VORRICHTUNG ZUM ERZEUGEN EINES BODENPROFILS ZUR BEGÜNSTIGUNG DER KEIMUNG UND DER ETABLIERUNG DES SÄMLINGS UND DER PFLANZE IM FORST**
DEVICE FOR PRODUCING A GROUND PROFILE FOR PROMOTING GERMINATION AND ESTABLISHMENT OF SEEDLING AND PLANT IN FORESTRY
DISPOSITIF DE FABRICATION D'UN PROFILÉ DE SOL FAVORISANT LA GERMINATION ET L'ÉTABLISSEMENT DES SEMIS ET DES PLANTES DANS LA FORÊT

(30) Priorität: 11.03.2019 DE 202019101374 U
(43) Veröffentlichungstag der Anmeldung: 16.09.2020
(73) Patentinhaber: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(56) Entgegenhaltungen:
- EP-A1- 3 360 403
- EP-A1- 3 381 254
- EP-A1- 3 420 790
- US-A1- 2016 338 260
- US-A1- 2017 359 950

## Beschreibung

Die Erfindung betrifft eine Vorrichtung zum Erzeugen eines Bodenprofils zur Begünstigung der Keimung und der Etablierung des Sämlings und der Pflanze im Forst umfassend ein Landfahrzeug und mindestens einem Bodenprofilierer mit einem Profilierwerkzeug ausgebildet zum Erzeugen eines Bodenprofils.

Für die Aussaat von Waldsamen bekannt sind motorgetriebene oder manuell und mithilfe von Zugtieren durch den Wald bewegte Saatmaschinen. Die EP 2 781 145 B1 beschreibt ein Scheibenräumgerät und Verfahren zur Herstellung von Saatstreifen für die Waldsaat von Nadelbaumarten. Die EP 2 944 176 B1 beschreibt ein Waldsägerät mit am Umfang gezahnten Scheiben (Zahnscheiben) zum Erzeugen einer Saatrille und ein Verfahren zum Aussäen von Laubbaumarten.

Die EP 3 381 254 A1 beschreibt eine Vorrichtung zum Aussäen von Waldsamen umfassend ein motorgetriebenes Arbeitsgerät mit einem Greifwerkzeug oder einer Schnittstelle für ein Anbaugerät und ein Saatgerät oder ein Saataggregat, das ausgebildet ist, in Anbaustellung von dem Greifwerkzeug gegriffen zu werden und/oder mit der Schnittstelle verbunden zu sein. Das Arbeitsgerät kann eine Forstmaschine, ein Bagger oder ein Kran sein. Die Vorrichtung kann eine Tiefenbegrenzung aufweisen, die die Eindringtiefe des Saataggregats oder Saatgeräts in den Waldboden begrenzt. Die Tiefenbegrenzung kann eine mit dem Ausleger oder einem Greifwerkzeug oder einem Saataggregat oder Saatgerät gekoppelte Rolleneinrichtung sein, die die Eindringtiefe des Saataggregats oder Saatgeräts in den Waldboden begrenzt. Ferner kann die Tiefenbegrenzung einen Sensor aufweisen, der ausgebildet ist, den Abstand des Sensors von der Bodenoberfläche zu erfassen. Mit dem Sensor ist eine Steuerungseinrichtung und mit der Steuerungseinrichtung eine Stelleinrichtung verbunden, die ausgebildet ist, die Lage des Saatgeräts oder des Saataggregat relativ zur Bodenoberfläche auf einen vorgegebenen Wert einzustellen. Bei Anlage der Rolleneinrichtung an der Bodenoberfläche kann es zur Einleitung hoher Kräfte in die Rolleneinrichtung, das Saatgerät und den Ausleger kommen. Durch die hohen Kräfte kann die Vorrichtung beschädigt und der Waldboden verdichtet werden. Der Sensor ist aufwendig, ungenau und aufgrund der rauen Arbeitsbedingungen störanfällig.

Die US 2016/338260 A1 beschreibt eine Reiheneinheit zum Verteilen von Saatgut. Die Reiheneinheit weist einen Schaft auf, der in die Erde eindringt und diese so weit öffnet, dass mit einem Saatgutzuführungssystem Saatgut in die Erde eingeführt werden kann. Die Reiheneinheit weist einen Ski auf, der ein zu tiefes Einsinken des Schafts verhindern soll. Der Schaft und das Saatgutzuführungssystem ragen durch einen Schlitz im hinteren Bereich des Skis in die Erde. Darüber hinaus weist der Ski im vorderen Bereich einen abgewinkelten Vorsprung auf, der ein Aufgraben des Untergrunds erleichtern soll.

Die EP 3 360 403 A1 beschreibt ein Säaggregat für eine Sämaschine. Das Säaggregat weist unter anderem einen Säschar auf, der dazu eingerichtet ist, das Saatgut in eine Saatfurche abzugeben. Der Säschar ist zwischen zwei Tiefenführungselementen angeordnet, die alternativ als Bandlaufwerke oder Tiefenführungskufen ausgebildet sein können.

Die EP 3 420 790 A1 beschreibt ein landwirtschaftliches Bepflanzungssystem, das über eine automatische Druckkontrolle verfügt. Dazu kommt unter anderem ein Spurrad zum Einsatz. Die US 2017/359950 A1 beschreibt eine Vorrichtung zum Pflanzen von Setzlingen in Gelände, das Hindernisse aufweist oder uneben ist. Die Vorrichtung weist ein Fahrzeug auf, das einen beweglichen Arm umfasst, an dem Setzlingsinjektoren angebracht sind.

Davon ausgehend liegt der Erfindung die Aufgabe zugrunde, eine Vorrichtung zum Erzeugen eines Bodenprofils der eingangs genannten Art zu schaffen, bei der die Profilierungstiefe des Profilierwerkzeuges mit geringeren Belastungen von Gerät und Boden genauer und mit verminderter Störungsanfälligkeit gesteuert werden kann.

Die Aufgabe wird durch eine Vorrichtung mit den Merkmalen von Anspruch 1 gelöst. Vorteilhafte Ausführungsarten der Vorrichtung sind in Unteransprüchen angegeben.

Die erfindungsgemäße Vorrichtung zum Erzeugen eines Bodenprofils zur Begünstigung der Keimung und der Etablierung des Sämlings und der Pflanze im Forst umfasst ein Landfahrzeug, mindestens einen Bodenprofilierer mit einem zum Erzeugen eines Bodenprofils im Boden ausgebildeten Profilierwerkzeug, eine Einrichtung zum Anpressen des Bodenprofilierers an den Boden mit einem einstellbaren Anpressdruck und eine Tiefenbegrenzung, die ausgebildet ist, sich auf der Bodenoberfläche abzustützen, wenn das Profilierwerkzeug um eine vorgegebene Profilierungstiefe in den Boden eingedrungen ist.

Bei der erfindungsgemäßen Vorrichtung wird das Eindringen des Profilierwerkzeuges in den Boden auf eine vorgegebene Profilierungstiefe dadurch begrenzt, dass sich die Tiefenbegrenzung auf der Bodenoberfläche abstürzt. Die Einrichtung zum Anpressen des Bodenprofilierers an den Boden weist einen einstellbaren Anpressdruck auf, sodass die Abhängigkeit von der Ausgestaltung des Bodenprofilierers und der Beschaffenheit des Bodens eingestellt werden kann. Durch Einstellen des Anpressdrucks kann erreicht werden, dass der Bodenprofilierer gerade mit dem Anpressdruck an den Boden angepresst ist, der erforderlich ist, um die vorgegebene Eindringtiefe zu erreichen. Infolgedessen kann stets mit einem geringen Anpressdruck gearbeitet werden, sodass die gewünschte Profilierungstiefe besser eingehalten und die Struktur der Vorrichtung weniger belastet und der Waldboden weniger verdichtet werden. Die Vorrichtung ist konstruktiv verhältnismäßig einfach, kann die vorgegebene Profilierungstiefe genau einhalten und ermöglicht auch unter den rauen Arbeitsbedingungen ein störungsfreies Arbeiten.

Mit dem Begriff "Bodenprofil" sind längliche Vertiefungen bezeichnet, die zur Aufnahme von Waldsamen im Waldboden vorbereitet werden. Hierbei kann es sich insbesondere um Saatstreifen mit Mittelsteg gemäß der in der EP 2 781 145 B1 beschriebenen Erfindung oder um Saatrillen gemäß der in der EP 2 944 176 B1 beschriebenen Erfindung handeln.

Gemäß einer Ausführungsart der Erfindung weist die Vorrichtung eine Dosiervorrichtung für Saatgut und ggf. einen Vorratsbehälter für Saatgut auf. Bei dieser Ausführungsart kann sogleich bei der Bildung der Bodenprofils das Saatgut maschinell in das Bodenprofil abgegeben werden. Die Erfindung betrifft aber auch Ausführungsarten, bei denen die Vorrichtung nur ausgebildet ist, Bodenprofil zu bilden. Bei dieser Ausführungsart kann das Bodenprofil die natürliche Verjüngung von Waldbäumen induzieren und/oder dem Bodenprofil kann gezielt Saatgut zugeführt werden und/oder in das Bodenprofil können Pflanzen gesetzt werden. Saatgut kann gegebenenfalls gezielt von Hand oder mittels einer zusätzlichen Sävorrichtung in das Bodenprofil hinein gegeben werden.

Der Bodenprofilierer ist ein bewegliches Werkzeug oder Hilfsmittel zum Erzeugen eines Bodenprofils für das Aussäen von Waldsamen, die Naturverjüngung oder das Setzen von Forstpflanzen.

Erfindungsgemäß ist der Bodenprofilierer ein Scheibenräumgerät mit zwei schalenförmig gewölbten Scheiben an einem Geräteträger oder ein Waldsägerät mit zwei Zahnscheiben an einem Geräteträger. Gemäß einer weiteren Ausführungsart weist das Scheibenräumgerät eine Anordnung von Scheiben auf, wie in der EP 2 781 145 B1 beschrieben. In dieser Hinsicht wird Bezug genommen auf die vorstehende europäische Patentschrift, deren Inhalt hiermit in diese Anmeldung aufgenommen wird. Im Unterschied zu dem darin beschriebenen Scheibenräumgerät weist der Bodenprofilierer der vorliegenden Erfindung jedoch nur einen Geräteträger auf, an dem die Drehachsen gelagert sind, welche die beiden Scheiben tragen, und ggf. eine Dosiervorrichtung für Saatgut. Außerdem weist der Bodenprofilierer keine zusätzliche Stützachse auf. Dies reduziert die Arbeitsbreite und erhöht das Einsatzspektrum des Bodenprofilierers in den Waldbeständen.

Gemäß einer anderen Ausführungsart ist der Bodenprofilierer ein Waldsägerät mit zwei am Umfang gezahnten Scheiben an einem Geräteträger. Gemäß einer weiteren Ausführungsart weist das Waldsägerät eine Anordnung von Scheiben auf, wie in der EP 2 944 176 B1 beschrieben. In dieser Hinsicht wird Bezug genommen auf die vorstehende europäische Patentschrift, deren Inhalt hiermit in diese Anmeldung aufgenommen wird. Im Unterschied zu dem darin beschriebenen Waldsägerät weist der Bodenprofilierer der vorliegenden Erfindung jedoch nur einen Geräteträger auf, an dem die Drehlager befestigt sind, in denen die Scheiben mittels Lagerwellen gelagert sind, und gegebenenfalls eine Dosiervorrichtung für Saatgut. Der Bodenprofilierer weist jedoch keine Vorrichtung zum Ankuppeln einer Zugkraftquelle (z. B. eines Arbeitspferdes oder einer Forstmaschine), keinen Schutzrahmen, keine Halterung für Zusatzgewichte und auch keinen Griff für die Manipulation des Gerätes im Gelände auf. Hierdurch erhöht sich die Wendigkeit und das Einsatzspektrum im Waldbestand.

Eine weitere Ausführungsart weist mindestens ein Bodenprofilieraggregat auf, dass eine Einheit aus mehreren zusammenwirkenden Bodenprofilierer ist. Mit einem Bodenprofilieraggregat können größere Flächen als mit einem Bodenprofilierer bearbeitet werden.

Gemäß einer weiteren Ausführungsart ist das Landfahrzeug ein motorgetriebenes Landfahrzeug, vorzugsweise ein motorgetriebenes Geländefahrzeug.

Gemäß einer weiteren Ausführungsart ist die Vorrichtung ein motorgetriebener Bodenprofilierer oder Saataggregat oder ein mit mindestens einem Bodenprofilierer verbundenes motorgetriebenes Arbeitsgerät. Der motorgetriebene Bodenprofilierer oder Bodenprofilieraggregat ist ein Landfahrzeug, das zugleich als Bodenprofilierer oder Bodenprofilieraggregat ausgebildet ist. Ein motorgetriebenes Arbeitsgerät ist auch für andere Zwecke als zum Erzeugen eine Bodenprofilierer insbesondere für das Aussäen von Waldsamen verwendbar.

Der motorgetriebene Bodenprofilierer oder Bodenprofilieraggregat oder das motorgetriebene Arbeitsgerät weist gemäß einer weiteren Ausführungsart mindestens einen Verbrennungsmotor und/oder mindestens einen Elektromotor zum Antreiben des jeweiligen Gerätes auf.

Gemäß einer weiteren Ausführungsart ist der motorgetriebene Bodenprofilierer oder Bodenprofilieraggregat oder das motorgetriebene Arbeitsgerät mit mindestens einem angebauten Bodenprofilierer ein selbstfahrendes (z. B. durch einen mitfahrenden Fahrer gesteuertes und/oder fernsteuerbares) oder autonom fahrendes (selbstständig fahrendes) Fahrzeug.

Gemäß einer weiteren Ausführungsart fährt der motorgetriebene Bodenprofilierer oder Bodenprofilieraggregat oder das motorgetriebene Arbeitsgerät auf Rädern oder auf Raupen, d.h. ist ein Räderfahrzeug oder ein Kettenfahrzeug.

Gemäß einer weiteren Ausführungsart umfasst die Vorrichtung ein motorgetriebenes Arbeitsgerät mit einem Greifwerkzeug und/oder einer Schnittstelle für ein Anbaugerät und mindestens einen Bodenprofilierer, der ausgebildet ist, in Anbaustellung von dem Greifwerkzeug gegriffen zu werden und/oder mit der Schnittstelle verbunden zu sein. Der Bodenprofilierer ist auf einfache Weise mit dem motorgetriebenen Arbeitsgerät verbindbar, wenn es für das Erzeugen eines Bodenprofils eingesetzt werden soll.

Gemäß einer weiteren Ausführungsart ist das Greifwerkzeug oder die Schnittstelle am Ende eines Auslegers des Arbeitsgerätes angeordnet. Gemäß einer weiteren Ausführungsart ist der Ausleger ein Knickarm oder ein Teleskoparm. Hierfür können herkömmliche Arbeitsgeräte mit Auslegern verwendet werden. Durch Bewegen des Auslegers kann das Arbeitsgerät der mindestens eine Bodenprofilierer entlang einer Saatstrecke verlagern. Hierbei kann es Arbeitsgerät auf einer vorgegebenen Fahrspur stehen oder entlang einer vorgegebenen Fahrspur verfahren werden und Arbeitsflächen in einem größeren Bereich neben der Fahrspur bearbeiten. Derartige Fahrspuren (z. B. Rückegassen) sind im Forst vielfach mit einem Abstand von 40 m oder 20 m angelegt. Durch verlagern des Bodenprofilierers von den Fahrspuren aus können hohe Arbeitsgeschwindigkeit erreicht und unwegsames oder steiles Gelände bearbeitet werden. Zudem wird hierdurch eine Bodenverdichtung vermieden.

Gemäß einer weiteren Ausführungsart handelt es sich bei dem motorgetriebenen Arbeitsgerät um eine Forstmaschine (Waldmaschine), einen Minibagger oder anderen Bagger oder einen Kran oder eine Seilwinde. Bei der Forstmaschine kann es sich um eine Forstmaschine mit einer Seilwinde handeln. Bei dem motorgetriebenen Arbeitsgerät kann es sich um ein herkömmliches Arbeitsgerät handeln, das ohnehin in einem Forstbetrieb oder dergleichen vorhanden ist.

Gemäß einer weiteren Ausführungsart weist der Bodenprofilierer einen Adapter und das motorgetriebene Arbeitsgerät eine Schnellwechselvorrichtung zum Verbinden mit dem Adapter auf. Bei dieser Ausführungsart ist die erfindungsgemäße Vorrichtung besonders einfach zusammenstellbar. Gemäß einer weiteren Ausführungsart ist der Adapter ein MS03-Adapter oder ein anderer handelsüblicher und/oder standardisierter Adapter und die Schnellwechselvorrichtung ein MS 03-Schnellwechsler oder ein anderer handelsüblicher und/oder standardisierter Schnellwechsler.

Erfindungsgemäß ist die Tiefenbegrenzung ein an der Unterseite des Bodenprofilierers angeordneter Schlitten. Dies ermöglicht eine besonders robuste Ausführung und gleichmäßige Verteilung des Anpressdruckes auf der Oberfläche des Waldbodens. Erfindungsgemäß weist der Schlitten an dem in Fahrtrichtung vorderen Ende einen nach oben gebogenen oder abgeknickten Rand auf. Gemäß einer weiteren Ausführungsart ist auch der hintere Rand des Schlitten nach oben gebogenen oder abgeknickt. Damit werden die bodennahen Lagerelemente der Scheiben geschützt und ein Einstecken des Schlittens in den Waldboden verhindert. Gemäß einer weiteren Ausführungsart weist der Schlitten in Fahrtrichtung vor den Scheiben des Scheibenräumgerätes oder des Waldsägerätes eine Platte und erfindungsgemäß im Bereich der Scheiben eine Aussparung und neben den Scheiben Kufen auf. Gemäß einer weiteren Ausführungsart ist der Schlitten in Verlagerungsrichtung des Bodenprofilierers im Wesentlichen vor den Scheiben angeordnet.

Gemäß einer weiteren Ausführungsart ist die Tiefenbegrenzung über eine Einstelleinrichtung mit dem Bodenprofilierer verbunden, wobei die Einstelleinrichtung ausgebildet ist, die Höhenlage der Tiefenbegrenzung bezüglich des Profilierungswerkzeuges des Bodenprofilierers einzustellen. Hierdurch wird eine Einstellung der Tiefenbegrenzung auf die Beschaffenheit des zu bearbeitenden Bodens ermöglicht.

Die Einstelleinrichtung kann eine manuell angetriebene mechanische Einstelleinrichtung sein, die von Hand eingestellt werden muss. Gemäß einer anderen Ausführungsart ist die Einstelleinrichtung eine hydraulische und/oder eine pneumatische und/oder eine elektrische Einstelleinrichtung. Diese Ausführungsart ermöglicht eine schnelle Einstellung der Höhenlage der Tiefenbegrenzung. Insbesondere ist eine Einstellung während des Erzeugens eines Bodenprofils möglich, um die Vorrichtung an Veränderungen der Bodenbeschaffenheit im Arbeitsbereich anzupassen.

Gemäß einer weiteren Ausführungsart ist mit der Einstelleinrichtung eine elektronische Steuerungseinrichtung verbunden, die ausgebildet ist, die Höhenlage der Tiefenbegrenzung einzustellen.

Eine weitere Ausführungsart umfasst mindestens einen Sensor, der ausgebildet ist, den Anpressdruck zu ermitteln, mit dem die Einrichtung zum Anpressen das Bodenprofilierers an den Boden andrückt, und eine elektronische Steuerungseinrichtung, die mit dem Sensor und der Einrichtung zum Anpressen verbunden ist, um den Bodenprofilierer bis zum Erreichen eines einstellbaren Anpressdruckes gegen den Boden zu drücken.

Der Sensor kann insbesondere den Anpressdruck in einer Hydraulik zum Antreiben eines Auslegers eines motorgetriebenen Arbeitsgerätes erfassen. Das motorgetriebene Arbeitsgerät wird gegebenenfalls bereits mit einem entsprechenden Sensor bereitgestellt, um die maximal auf die Struktur wirkenden Kräfte zu begrenzen.

Gemäß einer weiteren Ausführungsart ist ein Computer mit der Steuerungseinrichtung verbunden, wobei der Computer ausgebildet ist, die Höhenlage der Tiefenbegrenzung und/oder den Anpressdruck, mit dem der Bodenprofilierer gegen den Boden gedrückt wird, und/oder die Menge und/oder der Mengenstrom des Saatgutes, der von einer Dosiervorrichtung in das Bodenprofil abgegeben wird, in Abhängigkeit von Daten über die Beschaffenheit des zu bearbeitenden Bodens einzustellen. Die Daten über die Bodenbeschaffenheit in einem bestimmten Waldgebiet können beispielsweise durch Auswertungen von Karten und/oder Analysen des Geländes gewonnen und/oder Geoinformationssystemen entnommen werden und für die Einstellung der Tiefenbegrenzung und/oder des Anpressdruckes und/oder der Dosierung von Saatgut durch eine Dosiervorrichtung verwendet werden. Hierfür können die Daten dem Computer zugeführt werden.

Die Erfindung wird nachfolgend anhand der anliegenden Zeichnungen eines Ausführungsbeispiels näher erläutert. In den Zeichnungen zeigen:
- Fig. 1: einen Bodenprofilierer mit einem Adapter für die Verbindung mit einem motorgetriebenen Arbeitsgerät in einer Perspektivansicht schräg von oben;

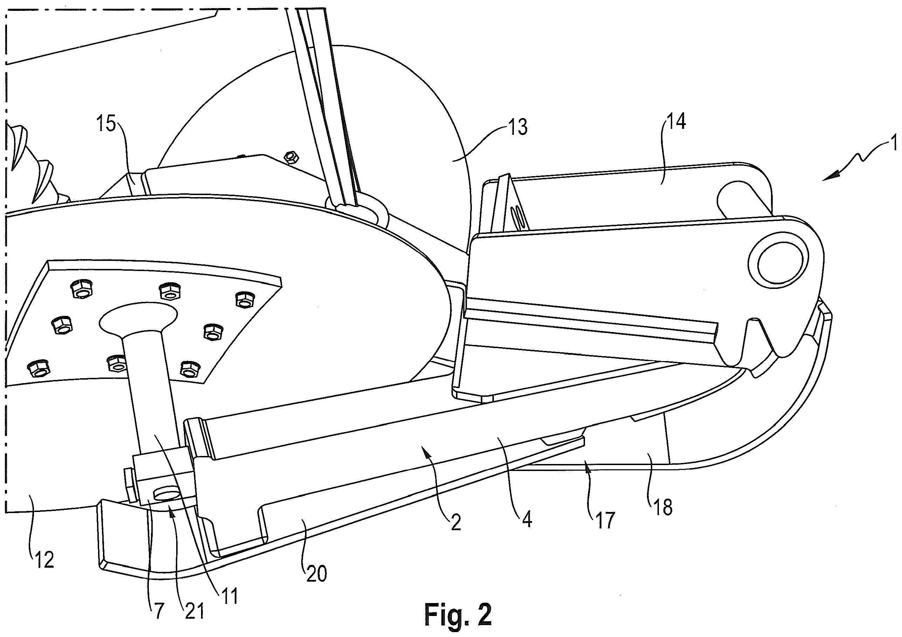

- Fig. 2: der Bodenprofilierer in einer Seitenansicht;
- Fig. 3: Bagger mit angebautem Bodenprofilierer gemäß Fig. 1 und 2 in einer Seitenansicht;
- Fig. 4: Schnellwechselvorrichtung des Baggers mit angebautem Bodenprofilierer in einer Detailansicht.

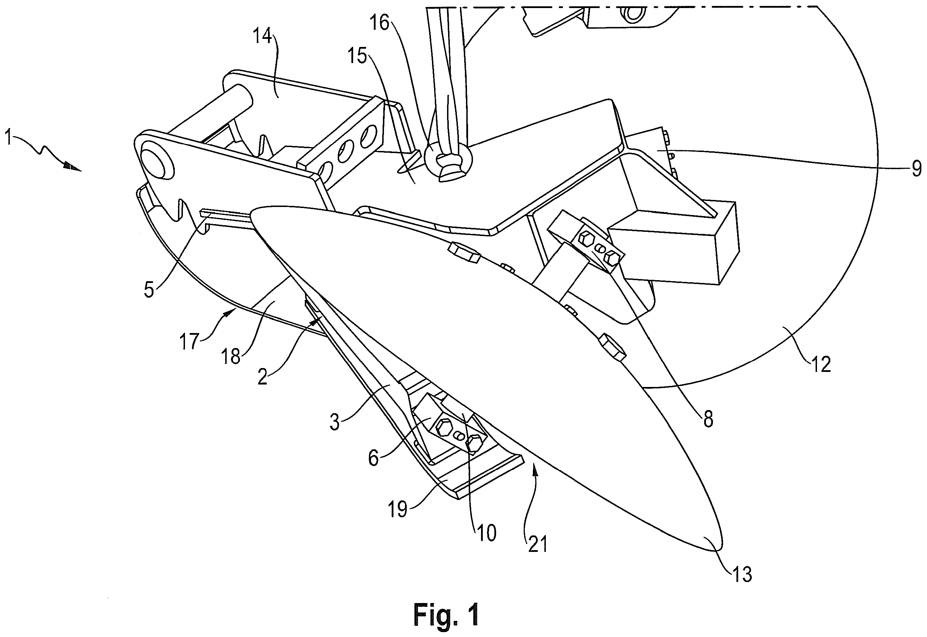

Gemäß Fig. 1 umfasst der Bodenprofilierer 1 einen kompakten Geräteträger 2. Dieser weist zwei erste Profilträger 3, 4 auf, die zu einer V-förmigen Anordnung miteinander verbunden sind. Ferner weist der Geräteträger 2 einen zweiten Profilträger 5 auf, der an der Spitze des V mit der Oberseite der beiden ersten Profilträger 3, 4 verbunden ist. Die ersten und zweiten Profilträger 3, 4, 5 sind allesamt Kastenprofile.

An den von der Spitze des V entfernten Enden der beiden ersten Profilträger 3, 4 sind erste Achslager 6, 7 fixiert und an den Seiten des zweiten Profilträgers 5 sind in der Nähe seines von der Spitze des V entfernten Endes zweite Achslager 8, 9 fixiert. Zwischen jeweils einem ersten Achslager 6, 7 und einem zweiten Achslager 8, 9 ist eine Welle 10, 11 gelagert auf der jeweils eine schalenförmig gewölbte Scheibe 12, 13 gehalten ist.

Oberhalb der Spitze des V ist auf dem zweiten Profilträger 5 ein Adapter 14 festgeschweißt. Im Beispiel handelt es sich um einen MS 03-Adapter.

Dahinter ist auf der Oberseite des zweiten Profilträgers eine Platte 15 mit einer Transportöse 16 festgeschweißt.

An der Unterseite des Geräteträgers 2 ist ein Schlitten 17 aus einem starken Blech festgeschweißt. Der Schlitten weist unterhalb der Spitze des V einen streifenförmigen Abschnitt 18 auf, der vorne bis etwa zum unteren Rand des Adapters 14 hochgebogen ist. Hinten weist der Schlitten 17 zwei Kufen 19, 20 auf, die jeweils unterhalb eines ersten Profilträgers 3, 4 verlaufen und hinter seinem hinteren Ende einen hochgebogenen Abschnitt aufweisen. Somit weist der Schlitten 17 zwischen dem streifenförmigen, vorderen Abschnitt 18 und den beiden Kufen 19, 20 eine Aussparung 21 auf, zwischen die die beiden Scheiben 12, 13 mit ihren unteren Rändern hindurch greifen.

Der Bodenprofilierer 1 entspricht hinsichtlich der Anordnung der Scheiben 12, 13 an einem Geräteträger 2 dem Scheibenräumgerät der EP 2 781 145 B 1.

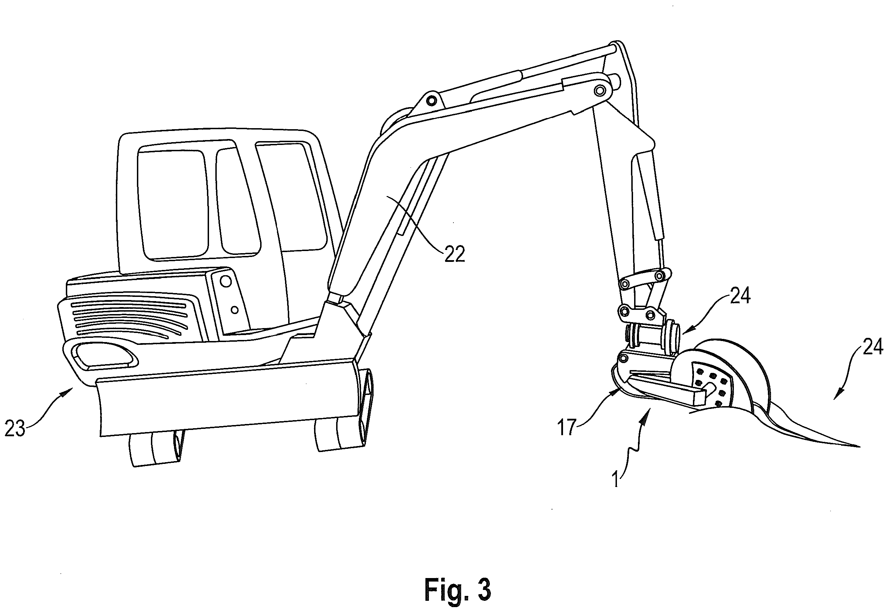

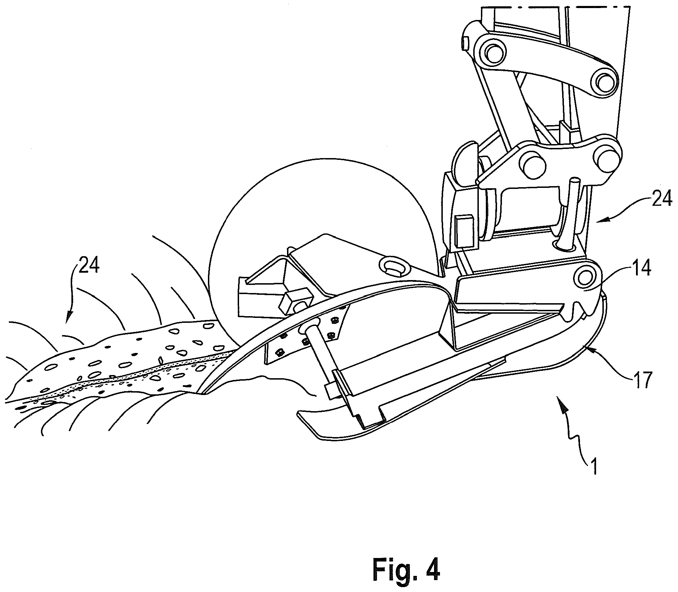

Gemäß Fig. 3 und 4 ist der Bodenprofilierer 1 am Ausleger 22 eines als Radgerät ausgebildeten Baggers 23 montiert. Der Ausleger 22 weist eine Schnellwechselvorrichtung 24 auf, die als MH3-Schnellwechselvorrichtung ausgebildet ist. Der Bodenprofilierer 1 ist so an dem Ausleger 22 montiert, dass in Verlagerungsrichtung zum Arbeitsgerät 23 weist.

Zum Erzeugen von Saatstreifen setzt der Maschinenführer des Baggers 23 der Bodenprofilierer mit dem Schlitten 17 auf dem Waldboden auf und steuert den Ausleger 22 so, dass der Schlitten 17 über die Bodenoberfläche gleitet. Die Einrichtung zum Anpressen (Hydraulik) des Auslegers 22 wird hierbei so gesteuert, dass der Anpressdruck einen bestimmten Wert nicht überschreitet. Beim Verlagern des Bodenprofilierers 1 über den Boden dringen die beiden Scheiben 12, 13 eine bestimmte Eindringtiefe in den Boden ein und erzeugen hinter dem Bodenprofilierer 1 zwei parallele Saatstreifen im Auflagehumus, die bis zur Mineralbodenschicht reichen. Zwischen den beiden Saatstreifen verbleibt ein Mittelsteg aus gewachsenem Boden. Nach Erzeugung des Bodenprofils 24 kann dieses die natürliche Waldverjüngung induzieren und/oder kann dem Bodenprofil gezielt Saatgut zugeführt werden, z. B. durch Einsäen von Hand oder maschinell. Ferner kann das Bodenprofil für die Etablierung von Pflanzen genutzt werden, die in das Bodenprofil eingesteckt werden können.

## Patentansprüche

1. Vorrichtung zum Erzeugen eines Bodenprofils zur Begünstigung der Keimung und der Etablierung des Sämlings und der Pflanze im Forst umfassend ein Landfahrzeug (23), mindestens einen Bodenprofilierer (1) mit einem zum Erzeugen eines Bodenprofils (24) im Boden ausgebildeten Profilierwerkzeug (12, 13), eine Einrichtung zum Anpressen (22) des Bodenprofilierers (1) an den Boden mit einem einstellbaren Anpressdruck und eine Tiefenbegrenzung (17), die ausgebildet ist, sich auf der Bodenoberfläche abzustützen, wenn das Profilierwerkzeug (12, 13) um eine vorgegebene Profilierungstiefe in den Boden eingedrungen ist, wobei der Bodenprofilierer (1) ein Scheibenräumgerät mit zwei schalenförmig gewölbten Scheiben (12, 13) an einem Geräteträger (2) oder ein Waldsägerät mit zwei Zahnscheiben an einem Geräteträger ist, **dadurch gekennzeichnet, dass** die Tiefenbegrenzung (17) ein an der Unterseite des Bodenprofilierers (1) angeordneter Schlitten ist, der an dem in Fahrtrichtung vorderen Ende einen nach oben abgebogenen oder abgeknickten Rand, im Bereich der Scheiben (12, 13) eine Aussparung (21) und neben den Scheiben (12, 13) Kufen (19, 20) aufweist.

2. Vorrichtung nach Anspruch 1, die eine Dosiervorrichtung für Saatgut umfasst, wobei die Dosiervorrichtung vorzugsweise auf dem Bodenprofilierer (1) angeordnet ist.

3. Vorrichtung nach Anspruch 1 oder 2, bei der der hintere Rand des Schlittens nach oben gebogen oder abgeknickt ist.

4. Vorrichtung nach einem der Ansprüche 1 bis 3, die mindestens ein Bodenprofilieraggregat umfasst, das eine Einheit aus mehreren Bodenprofilierer (1) ist.

5. Vorrichtung nach einem der Ansprüche 1 bis 4, bei der das Landfahrzeug (23) ein motorgetriebenes Landfahrzeug ist.

6. Vorrichtung nach Anspruch 5, die ein motorgetriebener Bodenprofilierer oder Profilieraggregat oder ein mit mindestens einem Bodenprofilierer (1) verbundenes motorgetriebenes Arbeitsgerät (23) ist.

7. Vorrichtung nach Anspruch 6, bei der das motorgetriebene Arbeitsgerät (23) eine Forstmaschine (Waldmaschine), ein Minibagger oder anderer Bagger oder ein Kran oder eine Seilwinde ist.

8. Vorrichtung nach Anspruch 6 oder 7, bei der der mindestens eine Bodenprofilierer (1) von einem Greifwerkzeug des motorgetriebenen Arbeitsgerätes (23) gegriffen oder mit einer Schnittstelle (24) für ein Anbaugerät des motorgetriebenen Arbeitsgerätes lösbar verbunden ist.

9. Vorrichtung nach Anspruch 7 oder 8, bei der der Bodenprofilierer (1) einen Adapter (14) und das motorgetriebene Arbeitsgerät (23) eine Schnellwechselvorrichtung (24) zum Verbinden mit dem Adapter (14) umfasst.

10. Vorrichtung nach einem der Ansprüche 1 bis 9, bei der Tiefenbegrenzung (17) über eine Einstellungseinrichtung mit dem Bodenprofilierer (1) verbunden ist, wobei die Einstelleinrichtung ausgebildet ist, die Höhenlage der Tiefenbegrenzung (17) bezüglich des Profilierwerkzeuges (12, 13) des Bodenprofilierer (1) einzustellen.

11. Vorrichtung nach einem der Ansprüche 1 bis 10, bei der die Einstelleinrichtung eine hydraulische und/oder eine pneumatische und/oder eine elektrische Einstelleinrichtung ist.

12. Vorrichtung nach Anspruch 11, umfassend eine mit der Einstelleinrichtung verbundene elektronische Steuerungseinrichtung, die ausgebildet ist, die Höhenlage Tiefenbegrenzung (17) einzustellen.

13. Vorrichtung nach einem der Ansprüche 1 bis 12, umfassend mindestens einen Sensor, der ausgebildet ist, den Anpressdruck zu ermitteln, mit dem die Einrichtung zum Anpressen (22) den Bodenprofilierer (1) an den Boden andrückt, und eine elektronische Steuerungseinrichtung, die mit dem Sensor und der Einrichtung zum Anpressen (22) verbunden ist, um das Saatgerät (1) bis zum Erreichen eines einstellbaren Anpressdruckes gegen den Boden zu drücken.

14. Vorrichtung nach Anspruch 12 und/oder 13, umfassend einen Computer, der mit der Steuerungseinrichtung verbunden ist, wobei der Computer ausgebildet ist, die Höhenlage der Tiefenbegrenzung (17) und/oder den Anpressdruck, mit dem der Bodenprofilierer gegen den Boden gedrückt wird, und/oder die von der Dosiervorrichtung abgegebene Menge und/oder der abgegebene Mengenstrom des Saatgutes in Abhängigkeit von Daten über die Beschaffenheit des zu bearbeitenden Bodens einzustellen.

## Claims

1. A device for producing a ground profile for promoting germination and establishment of seedling and plant in forestry, comprising a land vehicle (23), at least one ground profiler (1) having a profiling tool (12, 13) designed for producing a ground profile (24) in the ground, an apparatus for pressing (22) the ground profiler (1) onto the ground with an adjustable pressing pressure, and a depth limiter (17) that is designed to be supported on the surface of the ground when the profiling tool (12, 13) has penetrated the ground by a given profiling depth, wherein the ground profiler (1) is a disc harvester having two concavely curved discs (12, 13) on an equipment carrier (2) or a piece of forest sowing equipment having two toothed discs on an equipment carrier, **characterized in that** the depth limiter (17) is a sled that is arranged on the underside of the ground profiler (1) and that comprises an upwardly curved or bent edge at the front end in the direction of travel, a cutout (21) in the region of the discs (12, 13), and runners (19, 20) next to the discs (12, 13).

2. The device according to claim 1, which comprises a metering device for seeds, wherein the metering device is preferably arranged on the ground profiler (1).

3. The device according to claim 1 or 2, wherein the rear edge of the sled is curved or bent upward.

4. The device according to any one of claims 1 to 3, which comprises at least one ground profiling assembly that is a unit consisting of multiple ground profilers (1).

5. The device according to any one of claims 1 to 4, wherein the land vehicle (23) is a motorized land vehicle.

6. The device according to claim 5, which is a motorized ground profiler or profiling assembly or a motorized piece of work equipment (23) that is connected to at least one ground profiler (1).

7. The device according to claim 6, wherein the motorized piece of work equipment (23) is a forestry machine (forest machine), a mini excavator or other excavator, or a crane or a cable winch.

8. The device according to claim 6 or 7, wherein the at least one ground profiler (1) is gripped by a gripping tool of the motorized piece of work equipment (23) or is releasably connected to an interface (24) for an attachment of the motorized piece of work equipment.

9. The device according to claim 7 or 8, wherein the ground profiler (1) comprises an adapter (14) and the motorized piece of work equipment (23) comprises a quick-change device (24) for connection to the adapter (14).

10. The device according to any one of claims 1 to 9, wherein the depth limiter (17) is connected to the ground profiler (1) via an adjusting apparatus, wherein the adjusting apparatus is designed to adjust the height of the depth limiter (17) relative to the profiling tool (12, 13) of the ground profiler (1).

11. The device according to any one of claims 1 to 10, wherein the adjusting apparatus is a hydraulic and/or pneumatic and/or electric adjusting apparatus.

12. The device according to claim 11, comprising an electronic control apparatus that is connected to the adjusting apparatus and that is designed to adjust the height of the depth limiter (17).

13. The device according to any one of claims 1 to 12, comprising at least one sensor that is designed to determine the pressing pressure by means of which the apparatus for pressing (22) presses the ground profiler (1) onto the ground, and an electronic control apparatus that is connected to the sensor and the apparatus for pressing (22) in order to press the seeds (1) against the ground until an adjustable pressing pressure is reached.

14. The device according to claim 12 and/or 13, comprising a computer that is connected to the control apparatus, wherein the computer is designed to adjust the height of the depth limiter (17) and/or the pressing pressure by means of which the ground profiler is pressed against the ground, and/or the amount of seeds dispensed by the metering device and/or the dispensed mass flow of seeds depending on data relating to the properties of the ground to be worked.

## Revendications

1. Dispositif de fabrication d'un profilé de sol favorisant la germination et l'établissement des semis et des plantes dans la forêt, comportant un véhicule agricole (23), au moins un profileur de sol (1) doté d'un outil de profilage (12, 13) conçu pour réaliser un profilé de sol (24) dans le sol, un système de compression (22) du profileur de sol (1) contre le sol avec une pression de compression réglable et une limitation de profondeur (17), laquelle est conçue pour s'appuyer sur la surface du sol lorsque l'outil de profilage (12, 13) est enfoncé dans le sol selon une profondeur de profilage prédéfinie, dans lequel le profileur de sol (1) est un scarificateur à disques doté de deux disques (12, 13) voûtés en forme de coquilles sur un porte-outils (2) ou un semoir forestier doté de deux disques dentés sur un porte-outils, **caractérisé en ce que** la limitation de profondeur (17) est un chariot disposé sur le côté inférieur du profileur de sol (1), lequel présente un bord coudé ou plié vers le haut à l'extrémité avant dans la direction de déplacement, une cavité (21) dans la région des disques (12, 13) et des patins (19, 20) à côté des disques (12, 13).

2. Dispositif selon la revendication 1, lequel comporte un dispositif de dosage pour des semences, dans lequel le dispositif de dosage est disposé de préférence sur le profileur de sol (1).

3. Dispositif selon la revendication 1 ou 2, dans lequel le bord arrière du chariot est coudé ou plié vers le haut.

4. Dispositif selon l'une des revendications 1 à 3, lequel comporte au moins un agrégat de profilage de sol consistant en une unité composée de plusieurs profileurs de sol (1).

5. Dispositif selon l'une des revendications 1 à 4, dans lequel le véhicule agricole (23) est un véhicule agricole motorisé.

6. Dispositif selon la revendication 5, lequel est un profileur de sol ou un agrégat de profilage motorisé ou un engin agricole motorisé (23) relié à au moins un profileur de sol (1).

7. Dispositif selon la revendication 6, dans lequel l'engin agricole motorisé (23) est une machine forestière (machine de forêt), une mini-excavatrice ou une autre excavatrice ou une grue ou un treuil.

8. Dispositif selon la revendication 6 ou 7, dans lequel l'au moins un profileur de sol (1) est saisi par un outil de préhension de l'engin agricole motorisé (23) ou relié de façon détachable à une interface (24) pour un équipement de l'engin agricole motorisé.

9. Dispositif selon la revendication 7 ou 8, dans lequel le profileur de sol (1) comporte un adaptateur (14) et l'engin agricole motorisé (23) comporte un dispositif de remplacement rapide (24) pour le raccordement à l'adaptateur (14).

10. Dispositif selon l'une des revendications 1 à 9, dans lequel la limitation de profondeur (17) est reliée au profileur de sol (1) par le biais d'un système de réglage, dans lequel le système de réglage est conçu pour régler la position en hauteur de la limitation de profondeur (17) par rapport à l'outil de profilage (12, 13) du profileur de sol (1).

11. Dispositif selon l'une des revendications 1 à 10, dans lequel le système de réglage est un système de réglage hydraulique et/ou pneumatique et/ou électrique.

12. Dispositif selon la revendication 11, comportant un système de commande électronique relié au système de réglage, lequel est conçu pour régler la position en hauteur de la limitation de profondeur (17).

13. Dispositif selon l'une des revendications 1 à 12, comportant au moins un capteur, lequel est conçu pour déterminer la pression de compression avec laquelle le système de compression (22) comprime le profileur de sol (1) contre le sol, et un système de commande électronique, lequel est relié au capteur et au système de compression (22), afin de pousser l'appareil de semis (1) contre le sol jusqu'à l'atteinte d'une pression de compression réglable.

14. Dispositif selon la revendication 12 et/ou 13, comportant un ordinateur, lequel est relié au système de commande, dans lequel l'ordinateur est conçu pour régler la position en hauteur de la limitation de profondeur (17) et/ou la pression de compression avec laquelle le profileur de sol est poussé contre le sol, et/ou la quantité distribuée par le dispositif de dosage et/ou le flux de quantité des semences distribué en fonction de données concernant la nature du sol à traiter.
